# EUROPÄISCHE PATENTSCHRIFT

(11) **EP 0 923 854 B1**
(45) Veröffentlichungstag und Bekanntmachung des Hinweises auf die Patenterteilung: **30.07.2003**
(21) Anmeldenummer: 98123955.1
(22) Anmeldetag: 17.12.1998
(51) Int. Cl.: A01G 9/10, C05F 11/02

(54) **Verfahren und Vorrichtung zur Herstellung eines hochwertigen Torfersatzstoffes**
Process and device for making a high value peat substitute
Méthode et dispositif pour fabriquer un succédané de tourbe de haute qualité

(30) Priorität: 20.12.1997 DE 19757028
(43) Veröffentlichungstag der Anmeldung: 23.06.1999
(73) Patentinhaber: Bioprodukte Prof. Steinberg GmbH, 06217 Merseburg (DE); BUEHLER AG, 9240 Uzwil (CH)
(72) Erfinder: Steinberg, Prof.Dr.Karl-Hermann, D-06217 Merseburg (DE); Schaper,Dipl.-Ing.Ralph, D-30655 (DE); Hase,Dipl.-Ing.Rolf, D-06844 Dessau (DE); Giger, Dr.Franz, CH-9244 Niederuzwil (CH); Halter, Roland, CH-9000 St.Gallen (CH); Krois, Oskar, CH-8592 Uttwil (CH)
(74) Vertreter: Frommhold, Joachim, Dr.

(56) Entgegenhaltungen:
- EP-A- 0 590 256
- DE-A- 4 041 329
- DE-A- 19 514 975
- US-A- 4 088 528

## Beschreibung

Die Erfindung betrifft ein Verfahren und eine Vorrichtung zur Herstellung eines hochwertigen Torfersatzstoffes aus organischem Material für den Einsatz im Garten- und Landschaftsbau durch physikalisch-chemischen Aufschluß von lignocellulosehaltigen Materialien, vorzugsweise von naturbelassenen Resthölzern, wie z. B. Sägewerksabfällen, Holzhackschnitzeln mit und ohne Rindenanteil, Durchforstungsschnitt oder Chinaschilf.

Gegenwärtig werden im Erwerbsgartenbau, aber auch im Hobbygartenbau (Kleingärten, Blumenerden) Kultursubstrate auf der Rohstoffbasis Torf als Einzelprodukt und in verschiedenen Mischungen eingesetzt. Die Tatsache, daß es sich bei natürlichem Torf um eine endliche Ressource handelt, die ebenso wie andere fossile Brennstoffe einen für das weltweite Ökosystem wichtigen Kohlenstoffspeicher darstellt und darüber hinaus in Form von Torfmooren einzigartige Lebensräume für feuchtgebietsabhängige Pflanzen und Tiere bereitstellt, bedingt die Notwendigkeit der Herstellung von Alternativprodukten.

Die hohe Verfügbarkeit von Resthölzem hat bereits frühzeitig zu Produktentwicklungen auf der Basis Holz geführt.

Aus der EP-A-0 147 349 ist ein Verfahren zur Herstellung von Kultursubstraten bekannt. Bestimmte Holzarten werden nach diesem Verfahren gedämpft, anschließend defibriert und die Fasern ohne weitere Behandlung mit den anderen Stoffen vermischt Die bei der Herstellung dieser Produkte stattfindende mechanische Auffaserung der Einsatzstoffe, i.d.R. durch den Einsatz von Schneckenpressen, bedingt einen hohen spezifischen Einsatz exergiereicher kinetischer Energie, die während des Prozesses weitestgehend in Reibungswärme (Anergie) umgewandelt wird. Weitere Nachteile oben genannter Entwicklungen, die bislang einer größeren Markteinführung im Wege stehen, sind die andersartige Farbe bzw. der Geruch sowie teure bzw. nicht sehr umweltverträgliche Herstellungsverfahren.

Eine weitere Torfalternative wird in DE 3 627 861 C2 beschrieben. Der Nachteil dieses Verfahrens besteht zum einen in der aufgrund der Säurezugabe nicht geklärten Abwasserfrage, zum anderen in dem aufgrund der Trennung der Verfahrensschritte Hydrolyse, Extraktion und Zerfaserung relativ hohen apperativen Aufwendungen sowie des ebenfalls hohen spezifischen Energiebedarfs. Ein weiteres Manko ist die hohe Stickstoffimmobilisierung (nachgewiesen durch den sogenannten Zöttl-Test), d. h. der hohe Grad an mikrobiologischem Leben im Substrat, welches zur Folge hat, daß u. a. der für das pflanzliche Wachstum wichtige Nährstoff Stickstoff durch unerwünschte physiologische Nebenreaktionen aufgezehrt wird und somit nicht mehr für die Pflanze verfügbar ist.

Aus der EP-A 0 324 689 ist ein Verfahren zur Aufbereitung von Holzfasern mittels Thermoschneckenpressen bekannt

Auch die EP-A 0 472 684, von welcher die vorliegende Erfindung ausgeht, offenbart ein Verfahren zur mechanischen Auffaserung der organischen Einsatzstoffe durch den Einsatz von Schneckenpressen. Nachteilig bei diesem Verfahren ist die Trennung der Verfahrensschritte Mischen und Zugabe von Hilfsstoffen in einer Mischund Dosierstation einer Aufbereitungsanlage, in welcher das Material zerquetscht und mit den Hilfsstoffen imprägniert wird. Nachteilig ist auch der Transport zwischen dem Rohstofflager und der Misch- und Dosierstation mittels eines Schaufelladers. Ferner wird das holzartige Material in einer Thermoschneckenpresse zwischen zwei gegenüber angeordneten Schnecken zerquetscht und zerrieben und tritt in zerfasertem Zustand aus der Anlage aus. Dies bedingt einen hohen Einsatz an kinetischer Energie, die während des Prozesses weitgehend in Reibungswärme umgewandelt wird.

Die Aufgabe der vorliegenden Erfindung besteht darin, die Nachteile der aus dem Stand der Technik bekannten Lösungen zu vermeiden.

Erfindungsgemäss wird diese Aufgabe durch die Merkmale der Ansprüche 1 und 9 gelöst. Vorteilhafte Weiterbildungen der Erfindung sind in den Ansprüchen 2 bis 8 und 10 bis 16 ausgeführt.

Es wurde überraschend gefunden, dass eine adiabatische Druckentspannung von mit Wasserdampf beladenen Holzhackschnitzeln zu einer torfartigen Faserstruktur führt, bei gleichzeitiger Braunfärbung. Vorteilhaft kann deshalb zum einen auf Chemikalien zur Einfärbung des Torfersatzstoffes verzichtet werden, zum anderen kann exergiearme Energie, wie Prozessabwärme, zur Wasserdampferzeugung genutzt werden, was den Herstellungsprozess deutlich ökonomischer und ökologischer gestaltet.

Zweckmässig werden dem organischen Material Wasser und/oder Dampf zugefügt. Vorteilhaft wird der Dampf innerhalb einer Reaktionszone 24 zugeführt.

Des weiteren wurde überraschend herausgefunden, dass durch die Variation der Reaktionsbedingungen Temperatur, Behandlungszeit und Druckgradient die wesentlichen Produkteigenschaften, wie Faserstruktur, Luftkapazität, Wasserhaltevermögen und pH-Wert, gezielt eingestellt und den unterschiedlichsten Ansprüchen des Gartenbaus angepasst werden können. Der erfundene Torfersatzstoff weist neben dem Merkmal, mit zuvor genau definierten Produkteigenschaften hergestellt werden zu können, gegenüber dem zu substituierenden Torf ein wesentlich geringeres Schrumpfungsverhalten auf, was bei Topfpflanzenkulturen zu erheblichen Vorteilen bei der Wiederbenetzung und damit auch zur Wasser- und Düngemitteleinsparung führt.

Die Anforderungen des Gartenbaus an Erdsubstrate sind je nach Anwendungsgebiet sehr differenziert hinsichtlich der physikalischen, chemischen und biologischen Eigenschaften der entsprechenden Komponenten. Eine Innovation zu den bisher verwendeten Produkten ist immer dann sinnvoll, wenn es sich um ein biologisch nicht belebtes, d. h. inertes Produkt handelt und die physikalischen und chemischen Parameter mindestens so gut wie bei den bisherigen Komponenten (vornehmlich Torf) zu beurteilen sind.

Bei dem vorliegenden Verfahren werden vorwiegend Holzhackschnitzel, sowohl aus minderwertigen Sägewerksabfällen als auch aus gehäckseltem Durchforstungsschnitt, nach Anlieferung in mit Wasser gefüllten Vorratsbehältern 12 bis 48 Stunden zwischengelagert. Die so vergleichmäßigten und von mineralischen Anhaftungen gereinigten Holzhackschnitzel werden einem Druckreaktor mittels mechanischer Aufgabeeinrichtung zugeführt. Dieser wird anschließend 5 bis 25 Minuten mit gesättigtem Wasserdampf bei Temperaturen von 90 bis 250 °C, vorzugsweise 140 bis 200°C, und einem Druck von 2 bis 30 bar, vorzugsweise 10 bis 16 bar, beaufschlagt. Nach Ablauf der vorgegebenen Behandlungszeit wird der Inhalt des Druckbehälters adiabatisch entspannt und einem mit Wasser gespeisten Gegenstromwäscher zugeführt.

Alternativ zum diskontinuierlich betriebenen Druckreaktor kann der Prozeß kontinuierlich mittels Extrudertechnik realisiert werden. Dabei kann der notwendige Druck selbstaufbauend, d. h. ohne externen Dampferzeuger, erzeugt werden oder auch mit einer Wasserdampfeinspeisung aus einem externen Dampferzeuger aufgebaut werden.

Der gewaschene, feste Produktanteil kann entweder direkt als "Sauerkompost" oder als Pflanzsubstrat für Pilzkulturen genutzt werden oder durch Nachbehandlung inertisiert und als hochwertiger Torfersatzstoff im Garten- und Landschaftsbau eingesetzt werden. Die Inertisierung kann durch Zugabe von Enzymen während des Waschprozesses oder durch eine Pilzbeimpfung nach dem Waschvorgang erfolgen. Je nach Produktanforderungen kann eine Pilzbeimpfung des Feststoffes auch ohne vorherige Waschung zur Inertisierung des Produktes führen.

Die im Waschwasser gelösten Produktanteile werden durch entsprechende Verfahrensschritte aufkonzentriert und entweder als biologisch abbaubares Herbizid vermarktet, als Ausgangsstoff zur Pilzkultivierung oder zur Aufzucht von Mikroorganismen genutzt oder der Vergasung zugeführt. Das gereinigte Waschwasser wird im Kreislauf erneut als Waschwasser eingesetzt.

Der Vorteil der gezielten reproduzierbaren Einstellung von wichtigen Produktparametern unterscheidet den mittels des erfindungsgemäßen Verfahrens hergestellten Torfersatzstoff von den auf Kompostbasis entwickelten Torfalternativen, da dessen Produktparameter aufgrund der unterschiedlichen Komposteingangsstoffe nicht genau vorhersagbar sind.

Kompostprodukte werden aus organischen Abfällen unterschiedlicher Zusammensetzung mit Hilfe sogenannter Kompostierverfahren hergestellt. Dabei wird die mikrobiologische Zersetzung der abbaubaren Inhaltsstoffe durch Einstellung optimaler Randbedingungen (Nährstoffzugabe, Temperatur- und Feuchtigkeitsregulierung) erreicht Der Kompostierungsprozeß dauert zwischen vier Wochen und einem Jahr. Die Aufschlußdauer gemäß dem Verfahren der hier vorliegenden Erfindung beträgt je nach Anforderung an die Produkteigenschaften 5 bis 25 Minuten. Hinzu kommt eine den Prozeß unterstützende Vergleichmäßigungszeit des Ausgangsstoffes Holz von 12 bis 48 Stunden. Da es sich bei Torf und Torfersatzstoffen um voluminöse Massengüter handelt, führt die Reduzierung der Prozeßdauer nach dem erfindungsgemäßen Verfahren zu einem deutlich geringeren Flächenbedarf einer Anlage vergleichbarer Kapazität.

Während Torfersatzstoffe auf Kompostbasis weitestgehend pH-neutral sind (pH-Werte um 7,0), zeichnet sich der mittels hier beschriebenem Verfahren hergestellte Torfersatzstoff dadurch aus, daß er ebenso sauer (pH-Werte zwischen 3,0 und 5,0) eingestellt werden kann wie der zu substituierende Naturtorf.

Eine weitere wichtige, positive Eigenschaft des mittels der hier beschriebenen Erfindung hergestellten Torfersatzstoffes ist seine Sterilität, d. h. die Keimfreiheit des Produktes. Diese dient unter anderem der Verringerung des Einsatzes von Pflanzenschutzmitteln während der Kultivierung.

Nach einem weiteren Merkmal der Erfindung läßt sich der Torfersatzstoff inertisieren, d. h. er wird nach Zugabe einer speziellen Enzymmischung für die Besiedlung durch Mikroorganismen unattraktiv. Diese Eigenschaft wirkt sich positiv auf die für die Verwendung im Gartenbau wesentliche Voraussetzung einer stabilen Stickstoffdynamik aus (belegt durch den für den Nachweis einer Substrateignung notwendigen Zöttl-Test).

Des weiteren zeichnet sich der mittels Erfindung hergestellte Torfersatzstoff dadurch aus,
- daß er eine vom Trocknungs- und Durchfrostungsgrad unabhängige, sehr gute Benetzbarkeit und Wasseraufnahmefähigkeit besitzt,
- daß die Luftkapazität mit 24 - 65 Vol.% deutlich höher liegt als bei vergleichbaren Torfen,
- daß die Schrumpfung mit Werten von 0 - 20 % unter der Schrumpfung vergleichbarer Torfe liegt,
wodurch das Attribut "hochwertig" gerechtfertigt wird.

Das hier beschriebene Verfahren kann als nachhaltig betrachtet werden, da es den nachwachsenden Rohstoff Holz nutzt und erfindungsgemäß chemikalien- und schadstofffrei arbeitet sowie ein Teil der notwendigen Energie durch Vergasung der wasserlöslichen organischen Bestandteile bereitgestellt wird.

Die Auffaserung der Einsatzstoffe nach dem vorliegenden Verfahren führt zu einem vergleichsweise geringen Energiebedarf, der durch die Nutzung von Reststoffen in einem Vergasungsverfahren weiter vermindert wird. Die wasserlöslichen Aufschlußprodukte können als ökologisch abbaubares Herbizid zur Pilzkultivierung oder zur Aufzucht von Mikroorganismen genutzt werden, so daß der Prozeß zum einen durch die erweiterte Wertschöpfung und zum anderen durch die Minimierung der zu entsorgenden Abwassermengen sehr wirtschaftlich betrieben werden kann.

Nachfolgend soll die Erfindung anhand von Ausführungsbeispielen näher beschrieben werden:

### Beispiel 1:

Holzhackschnitzel, die zu 50 % aus minderwertigen Sägewerksabfällen und zu 50 % aus gehäckseltem Durchforstungsschnitt bestehen, werden nach Anlieferung bei Umgebungstemperatur in mit Wasser gefüllten Vorratsbehältern 12 bis 48 Stunden zwischengelagert. Die so eingeweichten Holzhackschnitzel mit Stückgrößen von maximal 150 mm Länge werden einem Druckreaktor mit einem Volumen von 200 I mittels mechanischer Aufgabeeinrichtung zugeführt Dieser wird anschließend 5 bis 25 Minuten mit gesättigtem Wasserdampf bei ca. 200 °C und 20 bar beaufschlagt. Nach Ablauf der vorgegebenen Reaktionszeit wird der Inhalt des Druckbehälters innerhalb von 4 s adiabatisch entspannt und einem mit Wasser gespeisten Gegenstromwäscher zugeführt.

Der gewaschene, feste Produktanteil kann entweder direkt als "Sauerkompost" oder als Pflanzsubstrat für Pilzkulturen genutzt werden oder durch Nachbehandlung inertisiert und als hochwertiger Torfersatzstoff im Garten- und Landschaftsbau eingesetzt werden. Die im Waschwasser gelösten Produktanteile werden durch an sich bekannte Verfahrensschritte aufkonzentriert und entweder als biologisch abbaubares Herbizid vermarktet, als Ausgangsstoff zur Pilzkultivierung oder zur Aufzucht von Mikroorganismen genutzt oder der Vergasung zugeführt. Das gereinigte Waschwasser wird im Kreislauf erneut als Waschwasser eingesetzt.

### Beispiel 2:

Die Erfindung betrifft auch einen Extruder zur kontinuierlichen Ausführung des Verfahrens nach Anspruch 1. Die Figuren 1 und 2 zeigen schematisch Gehäuseabschnitte eines Extruders in einer Längsansicht. Figur 2 zeigt auch schematisch eine Anordnung der Arbeitselemente an der Extruderschnecke. Figur 3 zeigt schematisch eine beispielhafte Anordnung der Arbeitselemente.

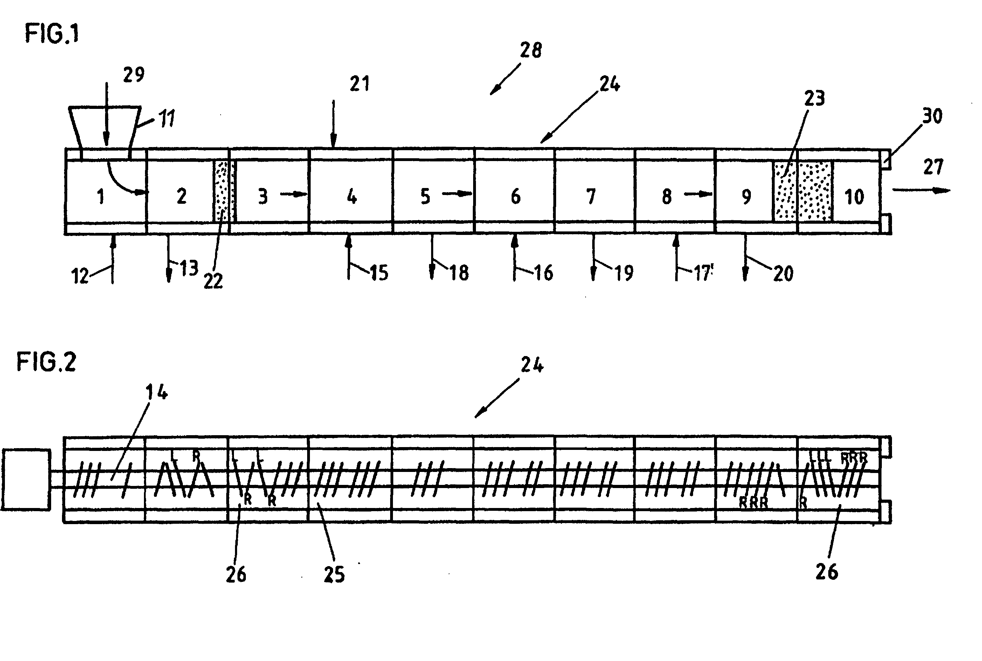

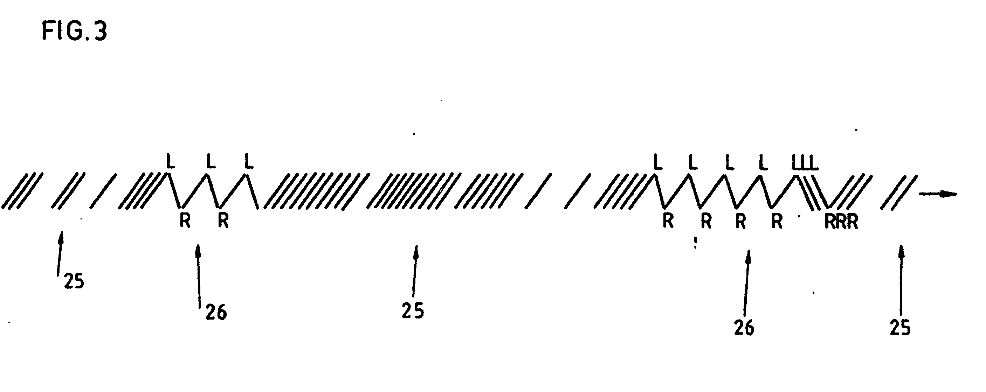

Gemäß Figur 1 gelangt organisches Material 29 durch einen Einfülltrichter 11 in die passiven Gehäuseabschnitte 1-2 des Extruders 28. Dorthin erfolgt eine Wasserzugabe durch die Wasserzufuhr 12, um einen Aufschluß des verholzten Materials durchführen zu können. Überflüssiges Wasser läuft durch den Wasseraustritt 13 im Gehäuse ab. Ferner gelangt der feuchte Holzbrei in die aktiven Gehäuseabschnitte 3-10, der sogenannten Reaktionszone 24, transportiert durch die Extruderschnecken 14 in Richtung des Pfeils, der den Materialfluß zeigt Diese Zone wird mittels Öl 15-17, 18-20 erhitzt und das Material der Wirkung von heißem Dampf 21 ausgesetzt Zur Herstellung von Torfersatz werden die Temperaturen von 90 - 250°C, vorzugsweise 140 - 200°C, und der Dampf mit einem Druck von 2 - 30 bar; vorzugsweise 10 - 16 bar, gewählt In den aktiven Gehäuseabschnitten 3-10 wird das organische Material zerquetscht, zerrieben, aufgefasert und physikalisch aufgeschlossen. Seine Faserstruktur wird durch die Variation der Behandlungszeit gezielt eingestellt. Demgegenüber werden dessen Luftkapazität und sein Wasseraufnahmevermögen durch Varianten der Druckdifferenz und der Extruderschneckenkonfiguration gezielt eingestellt. Längeres Verweilen des organischen Materials in der Reaktionszone 24 wird durch die besondere Ausbildung des Extruders 28 mit den Merkmalen des Anspruches 11 gewährleistet. Am Beginn und am Ende der Reaktionszone 24, gesehen von links und rechts in Figur 2, sind zwei Arbeitselemente 26 an der Dosierschnecke 14 vorgesehen. Die Arbeitselemente 26 bestehen aus den gegensinnig angeordneten Förderelementen R und Linkselementen L. Es können beliebige Konfigurationen von beiden Elementen gebildet werden. Figur 3 zeigt eine beispielhafte Anordnung der Arbeitselemente 26. Das links angeordnete Arbeitselement 26 enthält 3 Linkselemente L, das rechts angeordnete 4 und 3 nacheinander vorgesehene Linkselemente L Durch diese Anordnung werden zwei Pfropfen 22, 23 gebildet, so daß ein Aufstau des organischen Materials 29, ggf. dessen Massenstroms zwischen diesen entsteht. Die Pfropfen können entweder durch eine Düsenplatte oder durch Linkselemente erzeugt werden. Nach Durchführung der Verfahrensschritte gemäß Anspruch 1 tritt das fertige Produkt 27 durch eine Düse 30 aus dem Extruder aus.

Der Extruder weist mindestens 4, vorzugsweise 8 - 12 Gehäuseabschnitte auf.

### Beispiel 3:

Der Anlagenaufbau besteht aus einer volumetrisch arbeitenden Schnitzeldosierung, die einen gleichsinnig drehenden Doppelwellenextruder DNDG-62 füttert. Der Schneckendurchmesser beträgt 62 mm. Der Extrusionszylinder besteht aus fünf Gehäusen mit einer Länge von L = 20D.

In den Reaktionsextruder werden ca. 50 kg Nadelholzhackschnitzel pro Stunde mit maximal 50 mm Schnitzelgröße eindosiert. Durch die Anordnung der Extruderelemente und einen externen Wasserdampferzeuger wird erreicht, daß das eingetragene Material im Mittel 8,5 Minuten bei 187 °C einem Druck von 17 bar ausgesetzt ist.

Die Zerkleinerung und Zerfaserung der groben Holzschnitzel wird über die Schneckenkonfiguration bestimmt. Eine Wasserzugabe in Gehäuse 3 erlaubt die Befeuchtung von zu trockenem Holz. Der stabile Ausfluß aus der Düse hängt stark von der Faserfeuchte ab.

### Beispiel 4:

Ein Doppelwellenxtruder mit 8 Gehäusen wird mit vorzerkleinerten Holzhackschnitzeln beschickt. Die Gehäuse 2-8 werden beheizt. In die Zone des Aufschlusses wird Sattdampf bei 14 bar von einem Dampferzeuger eingespeist. Mit geeigneter Schneckenkonfiguration wird einzugseitig ein dichtender Pfropfen aufgebaut, so daß kein Dampf in die Einzugszone strömen kann. Der typische Durchsatz eines Doppelwellenextruders mit 62 mm Schneckendurchmesser liegt bei 50 kg Fasern pro Stunde.

### Beispiel 5:

Bei der Verarbeitung von gehackten Frischholzschnitzeln kann es notwendig sein, den hohen Wassergehalt durch eine Entwässerung vor der Zerfaserungszone zu senken. Dies geschieht in einem gegenüber Beispiel 4 um ein Gehäuse verlängerten Extruder über einen gravimetrischen Ablaß aus einem Spezialgehäuse. Feuchte Schnitzel mit einem Wassergehalt über 50 Ma.-% ermöglichen besonders stabile Prozeßbedingungen. So werden Durchsätze von 100 - 150 kg/h auf einem 62 mm Doppelwellenextruder erreicht. Der Holzaufschluß kann von 100- 200 °C und 2 - 20 bar in Wasser unter Sattdampfbedingungen eingestellt werden. Dabei kann das Material leicht plastische Eigenschaften zeigen. Die Frischholzschnitzel können Rindenanteile von 0 - 20 % enthalten.

## Patentansprüche

1. Verfahren zur Herstellung eines hochwertigen Torfersatzstoffes aus lignocellulosehaltigen Materialien, **dadurch gekennzeichnet, dass** ein physikalisch-chemischer Aufschluss der Einsatzstoffe durch Beaufschlagung mit Wasser und/oder Wasserdampf bei Temperaturen von 90 bis 250 °C und einem Druck von 2 bis 30 bar erfolgt, wobei durch die Variation der Wasserdampftemperatur der pH-Wert des Torfersatzstoffes gezielt zwischen Werten von 3,0 und 6,5 eingestellt wird und sich nach einer Behandlungszeit von 5 bis 25 Minuten eine adiabatische Druckentspannung anschliesst, wonach ein Torfersatzstoff mit definierter Faserstruktur erhalten wird, der ein Schrumpfungsverhalten mit Werten von 10 bis 20 % aufweist.

2. Verfahren nach einem der obigen Ansprüche, **dadurch gekennzeichnet, dass** der Wasserdampf innerhalb einer Reaktionszone (24) zugeführt wird.

3. Verfahren nach einem der obigen Ansprüche, **dadurch gekennzeichnet, dass** Wasser vor der Reaktionszone (24), in Richtung des Materialflusses gesehen, zugegeben wird.

4. Verfahren nach einem der obigen Ansprüche, **dadurch gekennzeichnet, dass** das aufgeschlossene Material gewaschen wird und die beim Auswaschen des Torfersatzes gewonnene Waschflüssigkeit als ökologisch abbaubares Herbizid und/oder als Mittel zur Pilzkultivierung und/oder zur Aufzucht von Mikroorganismen eingesetzt wird.

5. Verfahren nach einem der obigen Ansprüche, **dadurch gekennzeichnet, dass** das aufgeschlossene Material durch Zugabe von Enzymen nachbehandelt wird, wobei die Stickstofffixierung auf Werte zwischen 25 und 250 mg_{N}/l eingestellt wird.

6. Verfahren nach einem der obigen Ansprüche, **dadurch gekennzeichnet, dass** das aufgeschlossene Material eine Fermentation durchläuft, wobei die Stickstofffixierung auf Werte zwischen 25 und 250 mg_{N}/l eingestellt wird.

7. Verfahren nach einem der obigen Ansprüche, **dadurch gekennzeichnet, dass** das aufgeschlossene Material kompostiert wird, wobei die Stickstofffixierung auf Werte zwischen 25 und 250 mg_{N}/l eingestellt wird.

8. Verfahren nach einem der obigen Ansprüche, **dadurch gekennzeichnet, dass** die beim Auswaschen des Torfersatzstoffes gewonnene Waschflüssigkeit einem Vergasungsprozess zugeführt wird.

9. Extruder mit mindestens einer Dosierschnecke zur Herstellung eines hochwertigen Torfersatzstoffes aus lignocellulosehaltigen Materialien zur Durchführung des Verfahrens nach einem der Ansprüche 1 bis 8, wobei an der Schnecke mindestens zwei Anordnungen von Arbeitselementen (26) vorgesehen sind, zwischen denen sich entlang der mindestens einen Schnecke eine Reaktionszone (24) des Extruders (28) erstreckt; sowie mit einem Einfülltrichter (11) an einem passiven Gehäuseabschnitt (1, 2) am stromaufseitigen Ende des Extruders (28) zum Zugeben von Material (29) in den passiven Gehäuseabschnitt des Extruders (1, 2); einer Wasserzufuhr (12) am passiven Gehäuseabschnitt (1) zum Zugeben von Wasser in den passiven Gehäuseabschnitt (1, 2) des Extruders (28); einer Dampfzufuhr (21) zum Zugeben von heissem Dampf in die Reaktionszone (24) des Extruders (28); einem Mittel (15-20) zum Erhitzen der Reaktionszone (24).

10. Extruder nach Anspruch 9, **dadurch gekennzeichnet, dass** die Anordnungen (26) gegensinnig angeordnete Förderelemente (R) und Linkselemente (L) aufweisen.

11. Extruder nach Anspruch 10, **dadurch gekennzeichnet, dass** die Anordnungen (26) beliebige Konfigurationen von Förderelementen (R) und Linkselementen (L) aufweisen.

12. Extruder nach den Ansprüchen 9 bis 11, **dadurch gekennzeichnet, dass** zwei Pfropfen (22, 23) in den Gehäusen nach Einzug und vor Austritt des organischen Materials (29) erzeugt werden.

13. Extruder nach Anspruch 9, **dadurch gekennzeichnet, dass** sechs, vorzugsweise acht oder mehr Gehäuseabschnitte (1-10), vorgesehen sind.

14. Extruder nach Anspruch 9, **dadurch gekennzeichnet, dass** eine Reaktionszone (24) gebildet wird.

15. Extruder nach Anspruch 12, **dadurch gekennzeichnet, dass** die Pfropfen (22, 23) innerhalb der Reaktionszone (24) links und rechts angeordnet sind.

16. Extruder nach Anspruch 15, **dadurch gekennzeichnet, dass** die Pfropfen (22, 23) durch eine Düsenplatte oder durch Linkselemente erzeugt werden.

## Claims

1. A method for manufacturing a high-quality peat substitute out of lignocellulose-containing materials, **characterized in that** the feed materials are physicochemically pulped by exposure to water and/or water vapor at temperatures of 90 to 250 °C and a pressure of 2 to 30 bar, wherein the pH value of the peat substitute is specifically set between values of 3.0 and 6.5 by varying the water vapor temperature, and an adiabatic pressure relief sets in following a treatment period of 5 to 25 minutes, after which a peat substitute with a defined fiber structure is obtained, exhibiting a shrinking behavior with values of 10 to 20%.

2. The method according to one of the preceding claims, **characterized in that** the water vapor is supplied within a reaction zone (24).

3. The method according to one of the preceding claims, **characterized in that** water is added in front of the reaction zone (24) viewed in the direction of material flow.

4. The method according to one of the preceding claims, **characterized in that** the pulped material is washed, and the washing liquor obtained while washing out the peat substitute is used as an ecologically degradable herbicide and/or means for cultivating fungus and/or growing microorganisms.

5. The method according to one of the preceding claims, **characterized in that** the pulped material is post-treated by adding enzymes, wherein the nitrogen fixation is set to values of between 25 and 250 mg_{N}/l.

6. The method according to one of the preceding claims, **characterized in that** the pulped material is subjected to fermentation, wherein the nitrogen fixation is set to values of between 25 and 250 mg_{N}/l.

7. The method according to one of the preceding claims, **characterized in that** the pumped material is composted, wherein nitrogen fixation is set to values of between 25 and 250 mg_{N}/l.

8. The method according to one of the preceding claims, **characterized in that** the washing liquor obtained while washing out the peat substitute is routed to a gassing process.

9. An extruder with at least one metering screw for manufacturing a high-quality peat substitute out of lignocellulose-containing materials for executing the method according to one of claims 1 to 8, wherein the screw is provided with at least two arrangements of working elements (26), between which a reaction zone (24) of the extruder (28) extends along the at least one screw; as well as with a feed hopper (11) on a passive casing segment (1, 2) on the upstream end of the extruder (28) for adding material (29) in the passive casing segment of the extruder (1, 2); a water feed (12) on the passive casing segment (1) for adding water to the passive casing segment (1, 2) of the extruder (28); a vapor feed (21) for adding hot vapor into the reaction zone (24) of the extruder (28); a means (15-20) for heating the reaction zone (24).

10. The extruder according to claim 9, **characterized in that** the arrangements (26) exhibit oppositely arranged conveying elements (R) and left-handed elements (L) .

11. The extruder according to claim 10, **characterized in that** the arrangements (26) exhibit any configurations desired of conveying elements (R) and left-handed elements (L).

12. The extruder according to claims 9 to 11, **characterized in that** two plugs (22, 23) are generated in the casings after feeding and before discharge of the organic material (29).

13. The extruder according to claim 9, **characterized in that** six, preferably eight or more, casing segments (1-10) are provided.

14. The extruder according to claim 9, **characterized in that** a reaction zone (24) is formed.

15. The extruder according to claim 12, **characterized in that** the plugs (22, 23) are situated on the left and right inside the reaction zone (24).

16. The extruder according to claim 15, **characterized in that** the plugs (22, 23) are generated by a die plate or left-handed elements.

## Revendications

1. Procédé pour la fabrication d'un produit de remplacement de la tourbe de haute qualité à base de matériaux contenant de la lignocellulose, **caractérisé en ce qu'**une désagrégation physique et chimique des produits utilisés s'effectue par alimentation avec de l'eau et/ou de la vapeur d'eau à des températures de 90 à 250 °C et une pression de 2 à 30 bars, le pH du produit de substitution de tourbe étant réglé entre des valeurs de 3,0 et 6,5 en faisant varier la température de la vapeur d'eau et une décompression adiabatique faisant suite après un temps de traitement de 5 à 25 minutes, après quoi on obtient un produit de substitution de tourbe avec une structure de fibre définie qui présente un comportement au retrait avec des valeurs de 10 à 20 %.

2. Procédé selon l'une quelconque des revendications susmentionnées, **caractérisé en ce que** la vapeur d'eau est amenée à l'intérieur d'une zone de réaction (24).

3. Procédé selon l'une quelconque des revendications précédentes, **caractérisé en ce que** de l'eau est ajoutée avant la zone de réaction (24), vu dans le sens du flux de matériau.

4. Procédé selon l'une quelconque des revendications précédentes, **caractérisé en ce que** le matériau désagrégé est lavé et le liquide de lavage obtenu lors du lavage du substitut de tourbe est utilisé comme herbicide biodégradable ou comme moyen pour la culture des champignons et/ou la culture de micro-organismes.

5. Procédé selon l'une quelconque des revendications précédentes, **caractérisé en ce que** le matériau désagrégé est traité ultérieurement par l'addition d'enzymes, la fixation de l'azote étant réglée sur des valeurs comprises entre 25 et 250 mg_{N}/l.

6. Procédé selon l'une quelconque des revendications précédentes, **caractérisé en ce que** le matériau désagrégé subit une fermentation, la fixation de l'azote étant réglée sur des valeurs comprises entre 25 et 250 mg_{N}/l.

7. Procédé selon l'une quelconque des revendications précédentes, **caractérisé en ce que** le matériau. désagrégé est composté, la fixation de l'azote étant réglée sur des valeurs comprises entre 25 et 250 mg_{N}/l.

8. Procédé selon l'une quelconque des revendications précédentes, **caractérisé en ce que** liquide de lavage obtenu lors du lavage du substitut de tourbe est amené à un processus de gazéification.

9. Extrudeuse avec au moins une vis de dosage pour la fabrication d'un produit de remplacement de tourbe de haute qualité à base de matériaux contenant de la lignocellulose pour l'application du procédé selon l'une quelconque des revendications 1 à 8, moyennant quoi il est prévu sur la vis au moins deux dispositifs d'éléments de travail (26), entre lesquels une zone de réactivation (24) de l'extrudeuse (28) s'étend le long d'au moins une vis, et avec un entonnoir de remplissage (11) sur une partie de boîtier (1, 2) passive sur l'extrémité côté amont de l'extrudeuse (28) pour l'addition de matériau (29) dans la partie de boîtier passive de l'extrudeuse (1, 2), une arrivée d'eau (12) dans la partie de boîtier (1) passive pour l'addition d'eau dans la partie de boîtier (1, 2) passive de l'extrudeuse (28), une arrivée de vapeur (21) pour l'addition de vapeur chaude dans la zone de réaction (24) de l'extrudeuse (28), un moyen (15-20) pour le réchauffement de la zone de réaction (24).

10. Extrudeuse selon la revendication 9, **caractérisée en ce que** les dispositifs (26) présentent des éléments de transport (R) et des éléments à gauche (L) disposés dans le sens contraire.

11. Extrudeuse selon la revendication 10, **caractérisé en ce que** les dispositifs (26) présentent des configurations quelconques d'éléments de transport R et d'éléments à gauche (L)

12. Extrudeuse selon les revendications 9 à 11, **caractérisée en ce que** deux bouchons (22, 23) sont générés dans les boîtiers après l'entrée et avant la sortie du matériau (29) organique.

13. Extrudeuse selon la revendication 9, **caractérisé en ce qu'**il est prévu six, de préférence huit ou plus parties de boîtier (1-10).

14. Extrudeuse selon la revendication 9, **caractérisée en ce qu'**une zone de réaction (24) est formée.

15. Extrudeuse selon la revendication 12, **caractérisée en ce que** les bouchons (22, 23) sont disposés à l'intérieur de la zone de réaction (24) à gauche et à droite.

16. Extrudeuse selon la revendication 15, **caractérisée en ce que** les bouchons (22, 23) sont générés par une plaque de tuyère ou par des éléments à gauche.
